# EUROPÄISCHE PATENTSCHRIFT

(11) **EP 3 201 044 B1**
(45) Veröffentlichungstag und Bekanntmachung des Hinweises auf die Patenterteilung: **05.02.2020**
(21) Anmeldenummer: 15771125.0
(22) Anmeldetag: 30.09.2015
(51) Int. Cl.: B60N 2/50, B60N 2/06

(54) **SCHWINGSITZ FÜR EIN FAHRZEUG**
SUSPENSION SEAT FOR A VEHICLE
SIÈGE À SUSPENSION POUR UN VEHICULE

(30) Priorität: 01.10.2014 DE 102014219890
(43) Veröffentlichungstag der Anmeldung: 09.08.2017
(73) Patentinhaber: Volkswagen Aktiengesellschaft, 38440 Wolfsburg (DE)
(72) Erfinder: GIESSMANN, Stephan, 38458 Velpke (DE)
(86) Internationale Anmeldenummer: PCT/EP2015/072521
(87) Internationale Veröffentlichungsnummer: WO 2016/050823

(56) Entgegenhaltungen:
- DE-A1-102008 018 509
- US-A- 4 186 963
- US-B1- 6 199 820

## Beschreibung

Die Erfindung betrifft einen Schwingsitz für ein Fahrzeug, insbesondere Nutzfahrzeug, mit einem Oberrahmen und einem Unterrahmen, wobei der Oberrahmen an dem Unterrahmen derart in einer Schwingrichtung schwingbar gelagert ist, dass ein Abstand zwischen dem Oberrahmen und dem Unterrahmen veränderbar ist, und mit einer Arretiereinrichtung zum Arretieren des Oberrahmens an dem Unterrahmen in mehreren unterschiedlichen Abständen zueinander, wobei die Arretiereinrichtung eine Rastschiene und einen Kipphebel aufweist.

Schwingsitze für Fahrzeuge der eingangs genannten Art sind aus dem Stand der Technik bereits bekannt. So offenbart beispielsweise die Offenlegungsschrift DE 10 2008 018509 A1 einen Schwingsitz für ein Fahrzeug, bei dem ein Oberrahmen und ein Unterrahmen durch ein schwingfähiges Scherengestell miteinander verbunden sind, sodass der Oberrahmen zu dem Unterrahmen in seiner Höhe verstellbar beziehungsweise schwingbar ist, sodass der Abstand zwischen Unterrahmen und Oberrahmen veränderbar ist. Auf dem Oberrahmen ist dabei ein Sitzteil angeordnet, wobei der Schwingsitz den Sitzkomfort für den Fahrer erhöht. Um bei Bedarf ein Schwingen des Schwingsitzes zu verhindern ist eine Arretiereinrichtung vorgesehen, die den Oberrahmen an dem Unterrahmen formschlüssig arretiert. Die Arretiereinrichtung weist eine mit dem Scherengelenk verbundene Rastschiene auf, die sich entlang des Oberrahmens, also senkrecht zur Schwingrichtung erstreckt, und einer Gegenrastschiene, die an dem Oberrahmen befestigt ist, gegenüber liegt. Schwingt der Rahmen, so wird die Rastschiene bezüglich der Gegenrastschiene translatorisch in der Ebene des Oberrahmens verlagert. Der Rastschiene ist ein verschwenkbarer Kipphebel zugeordnet, der bei seiner Betätigung die Rastschiene in die Gegenrastschiene entgegen einer Federkraft drängt, sodass die Rastschienen formschlüssig ineinander greifen und ein weiteres Schwingen unterbunden wird.

Aus der Offenlegungsschrift US 6,199,820 B1 ist bereits ein Schwingsitz bekannt, der eine Höhenverstelleinrichtung und eine Dämpfereinrichtung aufweist. Mittels der Höhenverstelleinrichtung ist der vertikale Abstand eines Oberrahmens zu einem Unterrahmen einstellbar, wobei die Höhenverstelleinrichtung eine Luftfeder aufweist. Durch die Dämpfereinrichtung wird erreicht, dass Vibrationen durch Zulassen gedämpfter Relativbewegungen gedämpft und der Fahrkomfort erhöht werden. Durch eine Rastmechanik ist ein dem Unterrahmen zugeordneter Dämpferzylinder der Dämpfereinrichtung bei einer Sitzhöhenverstellung mitbewegbar, sodass die Dämpfungswirkung unabhängig von der Sitzhöhe wirkt, um das Übertragen von Vibrationen vom Unterrahmen auf den Oberrahmen zu unterbinden.

Der Erfindung liegt die Aufgabe zugrunde, einen verbesserten Schwingsitz zu schaffen, der einen einfachen und sicheren Betrieb der Arretiereinrichtung erlaubt.

Die der Erfindung zugrunde liegende Aufgabe wird durch einen Schwingsitz mit den Merkmalen des Anspruchs 1 gelöst. Dieser hat den Vorteil, dass die Arretiereinrichtung direkt in Schwingrichtung wirkt, sodass eine besonders steife Verbindung zwischen Oberrahmen und Unterrahmen bei Arretierung gewährleistet ist, und dass die Arretiervorrichtung an einer beliebigen Stelle des Umfangs des Oberrahmens und Unterrahmens anordenbar ist, was eine Anpassung an Randbedingungen beziehungsweise Einhandbedienung und eine Betätigung vereinfacht. Insbesondere kann auf eine aufwendige Bowdenzugverbindung, wie sie im Stand der Technik notwendig ist, verzichtet werden. Erfindungsgemäß ist hierzu vorgesehen, dass die Rastschiene parallel zur Schwingrichtung ausgerichtet und an dem Oberrahmen oder an dem Unterrahmen befestigt ist, und wobei der Kipphebel an dem Unterrahmen oder an dem Oberrahmen verschwenkbar gelagert ist und mindestens ein mit der Rastschiene in einer ersten Schwenkstellung zur Arretierung zusammenwirkendes Rastelement aufweist, das in einer zweiten Schwenkstellung außer Eingriff mit der Rastschiene steht. Die arretierende Wirkverbindung entsteht somit direkt zwischen dem Kipphebel und der Rastschiene und wirkt direkt in Schwingrichtung.

Gemäß einer vorteilhaften Weiterbildung der Erfindung ist vorgesehen, dass der Kipphebel bistabil verschwenkbar gelagert ist, wobei die erste Schwenkstellung und die zweite Schwenkstellung des Kipphebels jeweils eine stabile Schwenkstellung sind. Dies hat den Vorteil, dass der Kipphebel in der arretierenden Stellung und in der gelösten Stellung jeweils stabil liegt und sich nicht von selbst aus der stabilen ersten oder zweiten Stellung heraus verlagert. Dadurch wird insbesondere im Betrieb, beispielsweise wenn Beschleunigungen auf das Fahrzeug wirken, ein ungewolltes Lösen oder Arretieren der Arretiereinrichtung auf vorteilhafte Art und Weise vermieden.

Ferner ist bevorzugt vorgesehen, dass dem Kipphebel ein verschwenkbarer Betätigungshebel zugeordnet ist, der mit dem Kipphebel durch eine Kulissenführung zu dessen Betätigung in Eingriff steht. Der Kipphebel und der Betätigungshebel wirken somit durch eine Kulissenführung zusammen. Durch die Kulissenführung wird eine einfache und genaue Betätigung des Kipphebels durch den Betätigungshebel ermöglicht. Darüber hinaus ist durch die Kulissenführung, die insbesondere als zwangssteuernde Kulissenführung ausgebildet ist, ein Verschwenken des Kipphebels in die erste und in die zweite Stellung durch den Betätigungshebel eindeutig vorgebbar. Dies vereinfacht einem Benutzer die Bedienung der Arretiereinrichtung.

Gemäß einer vorteilhaften Weiterbildung der Erfindung ist vorgesehen, dass der Betätigungshebel durch ein mit dem Betätigungshebel zusammenwirkendes Federelement bistabil gelagert ist. Dadurch wird erreicht, dass der Betätigungshebel sich stets in einer von zwei Stellungen befindet, sodass er von dem Benutzer leicht auffindbar und betätigbar ist. Die bistabile Lagerung des Kipphebels kann dabei durch den Betätigungshebel und die mit dem Kipphebel zusammenwirkende Kulissenführung erreicht werden. Dies hat den Vorteil, dass der Kipphebel selbst einfacher und kompakter gestaltet werden kann.
Weiterhin ist bevorzugt vorgesehen, dass der Betätigungshebel durch das Federelement bistabil zwischen einer Arretierstellung, in welcher der Kipphebel durch die Kulissenführung in die erste Stellung bewegt ist, und einer Lösestellung, in welcher der Kipphebel durch die Kulissenführung außer Eingriff mit der Rastschiene steht, gelagert ist. Die Endstellungen des Betätigungshebels entsprechen somit der ersten und der zweiten Schwenkstellung des Kipphebels, sodass ein Benutzer ein gutes Gefühl für die Lage und die Betätigung des Kipphebels durch den Betätigungshebel erhält.

Gemäß einer vorteilhaften Weiterbildung der Erfindung ist außerdem vorgesehen, dass der Betätigungshebel und der Kipphebel an einem die Rastschiene zu seiner verschiebbaren Lagerung entlang der Rastschiene zumindest bereichsweise umgreifenden und an dem Unterrahmen oder an dem Oberrahmen befestigten Tragbügel gelagert sind. Durch die Lagerung des Betätigungshebels und des Kipphebels an dem Tragbügel lässt sich die Arretiereinrichtung auf einfache Art und Weise auch an einem bestehenden Schwingsitz nachmontieren. Dadurch, dass die Rastschiene von dem Tragbügel zumindest bereichsweise zu ihrer verschiebbaren Lagerung umgriffen wird, ist darüber hinaus der Tragbügel sicher an der Rastschiene geführt, wodurch der an dem Tragbügel angeordneten Befestigungshebel und der Kipphebel stets in einer optimalen Ausrichtung bezüglich der Rastschiene gehalten sind. Insbesondere ist vorgesehen, dass der Tragbügel die Rastschiene an ihrer von dem Kipphebel abgewandten Seite hintergreift, sodass ein Gegendruck zu dem insbesondere federkraftbeaufschlagten Kipphebel gewährleistet ist, der ein sicheres Verrasten und Arretierung der Arretiereinrichtung dauerhaft gewährleistet.

Weiterhin ist bevorzugt vorgesehen, dass dem Kipphebel ein federvorgespannter Nachstellhebel zugeordnet ist, der den Kipphebel in die erste Schwenkstellung drängt. Durch den federvorgespannten Nachstellhebel wird somit eine Druckkraft auf den Kipphebel ausgeübt, durch welche der Kipphebel in die erste, mit der Rastschiene verrastende Stellung verschwenkt wird. Hierdurch wird die zuvor bereits erwähnte Federvorspannkraft für den Kipphebel auf vorteilhafter Art und Weise bereitgestellt, wobei auf eine bistabile Lagerung des Kipphebels verzichtet werden kann. Auch kann vorgesehen sein, dass der federvorgespannte Nachstellhebel zusätzlich zu einer Federvorspannung des Kipphebels vorgesehen wird. Der federvorgespannte Nachstellhebel gewährleistet insbesondere, dass der Kipphebel in seiner ersten Schwenkstellung verbleibt. Vorzugsweise wirkt der Nachstellhebel selbsthemmend mit dem Kipphebel zusammen, wenn sich der Kipphebel in der ersten Schwenkstellung befindet, sodass der Kipphebel nicht aus der ersten Schwenkstellung heraus bewegbar ist, wenn nicht zuvor der Nachstellhebel in eine Freigabestellung verschwenkt wird.

Vorzugsweise ist dazu vorgesehen, dass ein Nachstellhebel verschwenkbar an dem Tragbügel gelagert und mit einem Ende dem Kipphebel zu dessen Beaufschlagung zugeordnet ist, um in der ersten Schwenkstellung des Kipphebels eine Selbsthemmung zu erreichen. Der Nachstellhebel ist somit zwischen der Lagerung und dem Kipphebel verspannbar. Insbesondere liegen eine Drehachse des Nachstellhebels und die Berührungsstelle des Nachstellhebels an dem Kipphebel in einer Linie der Bewegungsrichtung des Kipphebels beim Verschwenken, wenn sich der Kipphebel in seiner ersten verrastenden Schwenkstellung befindet. Hierdurch wird die Selbsthemmung des Nachstellhebels auf einfache und sichere Art und Weise gewährleistet.

Weiterhin ist bevorzugt vorgesehen, dass der Betätigungshebel ein Mitnehmerelement aufweist, das beim Verbringen des Betätigungshebels von der Arretierstellung in die Lösestellung den Nachstellhebel in seine zweite Stellung bewegt. Hierdurch wird in vorteilhafter Weise das Lösen des Nachstellhebels aus seiner klemmenden beziehungsweise selbstgehemmten Stellung bei einer Betätigung des Betätigungshebels gewährleistet. Das Mitnehmerelement ist insbesondere als Mitnehmervorsprung an dem Betätigungshebel ausgebildet und steht seitlich von diesem derart ab, dass er den Nachstellhebel entgegen der Federvorspannkraft mitnimmt, wenn der Betätigungshebel in die Lösestellung bewegt wird.

Weiterhin ist bevorzugt vorgesehen, dass der Kipphebel zwei Rastelemente aufweist, die als in verschiedene Richtungen weisende Rastlaschen ausgebildet sind. Dadurch ist der Kipphebel in Schwingrichtung zweiseitig an der Rastschiene abstützbar, sodass die Arretierung, unabhängig davon in welche Richtung Beschleunigungen wirken, nicht überwunden wird. Durch die Ausbildung als in verschiedene Richtungen weisende Rastlaschen wird erreicht, dass die Rastschiene auf einfache Art und Weise ausgebildet sein kann. Insbesondere kann vorgesehen sein, dass die Rastschiene Vertiefungen zur Aufnahme der Rastlaschen oder auch Öffnungen zur bereichsweisen Aufnahme der Rastlaschen aufweist. Alternativ kann vorgesehen sein, dass als Rastelement ein Rastbolzen vorgesehen ist, der in ein Sägezahn- oder Wellen-Profil der Rastschiene eingreift, um eine Arretierung zu gewährleisten.

Im Folgenden soll die Erfindung anhand der Zeichnung näher erläutert werden. Dazu zeigen
- Figur 1: einen Schwingsitz mit einer vorteilhaften Arretiereinrichtung gemäß einem ersten Ausführungsbeispiel,
- Figur 2: eine erste Detailansicht der Arretiereinrichtung,
- Figur 3: eine zweite Detailansicht der Arretiereinrichtung und
- Figur 4: den Schwingsitz mit einer Arretiereinrichtung gemäß einem weiteren Ausführungsbeispiel.

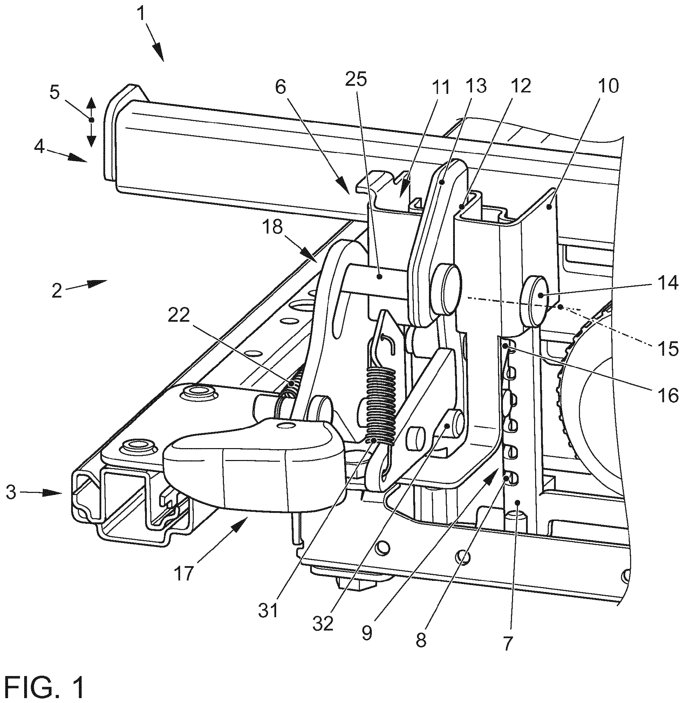

Figur 1 zeigt in einer perspektivischen Darstellung einen Schwingsitz 1 für ein Kraftfahrzeug, der ein Sitzteil (hier nicht dargestellt) aufweist, sowie ein Sitzgestell 2 an welchem das Sitzteil angeordnet ist. Das Sitzgestell 2 weist einen fest an dem Fahrzeug anordenbaren Unterrahmen 3 sowie einen Oberrahmen 4 auf, an welchem das Sitzteil angeordnet ist. Der Oberrahmen 4 ist zu dem Unterrahmen 3 derart beweglich gelagert, dass er in der Höhe, wie durch einen Doppelpfeil 5 angedeutet, schwingen kann, wodurch sich der Abstand zwischen dem Oberrahmen 4 und dem Unterrahmen 3 verändert. Das Sitzgestell 2 kann, um die Schwingfähigkeit des Oberrahmens 4 zu gewährleisten, beispielsweise ein federkraftbeaufschlagtes Scherengestell, das zwischen Oberrahmen 4 und Unterrahmen 3 wirkt, aufweisen.

Um es dem Benutzer des Schwingsitzes 1 im Betrieb zu ermöglichen, die Schwingfunktion abzustellen und den Oberrahmen 4 bezüglich des Unterrahmens 3 fest zu arretieren, ist eine Arretiereinrichtung 6 vorgesehen, mittels welcher der Oberrahmen 4 bezüglich des Unterrahmens 3 in mehreren unterschiedlichen Abständen bei Bedarf fest arretierbar ist.

Die Arretiereinrichtung 6 weist dazu vorliegend eine fest an dem Unterrahmen 3 angeordnete Rastschiene 7 auf, die sich in Schwingrichtung, also nach oben in Richtung des Oberrahmens 4 insbesondere vertikal in die Höhe erstreckt. Die Rastschiene 7 weist in ihrer Längserstreckung eine Vielzahl, insbesondere gleichmäßig voreinander beabstandeter Vertiefungen 8 auf, die ein Rastprofil 9 der Rastschiene 7 bilden.

Die Arretiereinrichtung 6 weist weiterhin eine an dem Oberrahmen 4 befestigte Baugruppe auf, die im Folgenden erläutert werden soll. Die Baugruppe weist einen Tragbügel 10 auf, der fest an dem Oberrahmen 4 gehalten ist. Der Tragbügel 10 ist zur Aufnahme der Rastschiene 7 ausgebildet, insbesondere derart, dass die Rastschiene 7 in einer zwischen Tragbügel 10 und Oberrahmen 4 gebildeten Aufnahme 11 in ihrer Längserstreckung geführt gehalten ist, sodass der Tragbügel 10 entlang der Rastschiene 7 verschiebbar ist. Der Tragbügel 10 kann grundsätzlich ein- oder mehrteilig ausgebildet sein.

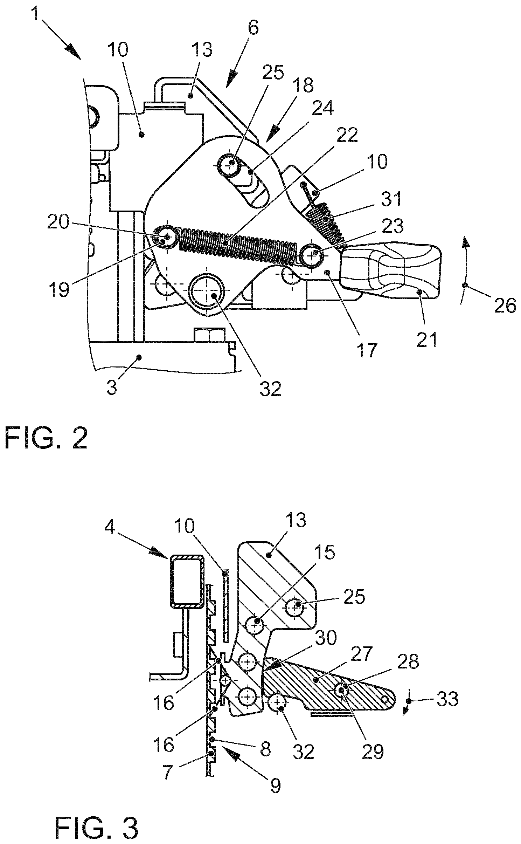

Der Tragbügel 10 weist darüber hinaus auf der dem Oberrahmen 4 abgewandten Seite eine Aufnahme 12 auf, in welcher ein Kipphebel 13 seitlich geführt gehalten ist. Der Kipphebel 13 ist durch einen Gelenkbolzen 14 um eine Drehachse 15 verschwenkbar an dem Tragbügel 10 gehalten, wobei die Drehachse 15 sich quer zu der Rastschiene 7 erstreckt. Der Kipphebel 13 trägt gemäß dem vorliegenden Ausführungsbeispiel beabstandet zu der Drehachse 15 zwei Rastelemente 16 auf, die als Rastlaschen ausgebildet und in unterschiedliche Richtungen weisend ausgerichtet sind. Eine der Rastlaschen weist dazu in Richtung des Oberrahmens 4 und die andere Rastlasche (in Figur 1 verdeckt) in Richtung des Unterrahmens 3, wie beispielsweise in Figur 3 gezeigt. Die Rastelemente 16 sind dazu ausgebildet, in die Vertiefungen 8 der Rastschiene einzugreifen. Dabei sind die Rastelemente 16 derart ausgerichtet und angeordnet, dass sie gleichzeitig in jeweils eine Vertiefung 8 der Rastschiene 7 eingreifen, sodass der Kipphebel 13 an der Rastschiene 7 weder in die eine noch in die andere Richtung verschiebbar ist. In dieser ersten Schwenkstellung arretiert somit der Kipphebel 13 die Baugruppe beziehungsweise den Oberrahmen 4 an der Rastschiene 7 und damit an dem Unterrahmen 3, sodass ein Schwingen des Sitzgestells 2 verhindert ist. Wird der Kipphebel 13 um die Drehachse 15 herum in eine zweite Schwenkstellung verschwenkt, sodass die Rastelemente 16 außer Eingriff mit der Rastschiene 7 gebracht werden, so kann das Sitzgestell 2 wieder gemäß Doppelpfeil 5 schwingen.

Zum Betätigen des Kipphebels 13 ist ein Betätigungshebel 17 vorgesehen, der durch eine Kulissenführung 18 mit dem Kipphebel 13 zusammenwirkt. Figur 2 zeigt hierzu in einer Seitenansicht die Arretiereinrichtung 6 mit Blick auf den Betätigungshebel 17. Der Betätigungshebel 17 ist plattenartig ausgebildet und durch einen Gelenkbolzen 19 um eine Drehachse 20 verschwenkbar an dem Tragbügel 10 gelagert. An einem von dem Gelenkbolzen 19 abgewandten Ende weist der Betätigungshebel 17 eine Handhabe 21 auf, mittels welcher ein Benutzer den Betätigungshebel 17 um die Drehachse 17 verschwenken kann. Der Betätigungshebel 17 ist vorliegend als bistabiler Betätigungshebel 17 ausgebildet. Dazu ist ein Federelement 22 vorgesehen, dass als Zugfeder, insbesondere als Schraubenzugfeder ausgebildet und zwischen dem Gelenkbolzen 19 und einem der Handhabe 21 zugeordneten Halteelement 23, insbesondere Haltebolzen, auf Zug vorgespannt ist. Das Halteelement 23 liegt dabei bevorzugt höher oder tiefer als die Drehachse 20, um die bistabile Lagerung zu gewährleisten. Die Kulissenführung 18 weist etwa auf Höhe des Federelements 22 und beabstandet dazu einen Führungsschlitz 24 auf, der alternativ auch als Führungsnut ausgebildet sein kann. In dem Führungsschlitz 24 liegt ein Führungsstift 25 ein, der fest mit dem Kipphebel 13 beabstandet zu der Drehachse 15 angeordnet ist. Der Führungsstift 25 ist in dem Führungsschlitz 24 im Wesentlichen spielfrei verschiebbar gelagert, sodass durch die Kulissenführung 18 eine Zwangsführung des Kipphebels 13 vorgesehen ist. Befindet sich der Führungsstift 25 an einem ersten Ende des Führungsschlitzes 24, wie in Figur 2 dargestellt, befindet sich der Kipphebel 13 in der ersten, den Schwingsitz 1 arretierenden Stellung. Der Betätigungshebel 17 befindet sich dann in einer Arretierstellung. Durch das Federelement 22 und die Kulissenführung 18 ist die Lösestellung des Betätigungshebels 17 eine stabile Stellung, aus welcher der Betätigungshebel 17 nur durch Überwinden der Federvorspannkraft des Federelements 22 herausbewegbar ist. Wird der Betätigungshebel 17 mittels der Handhabe 21 gemäß Pfeil 26 unter Überwindung der Federvorspannkraft des Federelements 22 nach Oben um die Drehachse herum verschwenkt, bis der Führungsstift 25 an dem anderen Ende des Führungsschlitzes 24 anliegt, wird durch die Kulissenführung 18 der Kipphebel 13 in die zuvor bereits genannte zweite Stellung verbracht, in welcher die Rastelemente 16 außer Eingriff mit der Rastschiene 7 stehen. Durch das Federelement 22 und die Kulissenführung 18 befindet sich dann der Betätigungshebel 17 wieder in einer stabilen Stellung, die die Lösestellung des Betätigungshebels 17 darstellt. Durch die bistabile Lagerung des Betätigungshebels 17 ist auch der Kipphebel 13 über die Kulissenführung 18 und das Federelement 22 bistabil gelagert, sodass ein versehentliches Lösen der Arretierung der Arretiereinrichtung 6 sicher vermieden wird.

Alternativ ist bevorzugt vorgesehen, dass die Kulissenführung 18 nicht zu einer bistabilen Lagerung des Kipphebels 13 führt. Vielmehr ist vorgesehen, dass die Kulissenführung 18 ein Verlagern des Kipphebels 13 mit dem Führungsstift 25 innerhalb des Führungsschlitzes 24 erlaubt. Hierdurch wird erreicht, dass der Betätigungshebel ein Stück weit beziehungsweise über einen vorgebbaren Schwenkwinkelbereich unabhängig von dem Kipphebel 13 verschwenkbar ist. Der Fürhungsschlitz erstreckt sich dazu vorzugsweise entlang einer Umfangsbahn bezüglich der Drehachse 15 des Kipphebels 13.

Die Arretiereinrichtung 6 weist dabei einen federvorgespannten Nachstellhebel 27 auf, der dazu dient, den Kipphebel 13 in seiner arretierenden Stellung festzustellen. Mit Bezug auf Figuren 1 und 3 soll die Funktionsweise und der Aufbau des Nachstellhebels 27 näher erläutert werden. Der Nachstellhebel 27 ist durch einen Gelenkbolzen 28 an dem Tragbügel um eine Schwenkachse 2 verschwenkbar gelagert. Dabei ist ein Ende des Nachstellhebels 27 dem Kipphebel 13 derart zugeordnet, dass das Ende 30 an dem Kipphebel 13 auf der der Rastschiene 7 abgewandten Seite in seiner Ausgangstellung, wie in Figur 3 gezeigt, anliegt. Die Kontaktstelle zwischen Nachstellhebel 27 und Kipphebel 13 ist dabei unterhalb der Drehachse 15 des Kipphebels 13 angeordnet, im Wesentlichen den Rastelementen 16 gegenüberliegend. In der Ausgangsstellung des Nachstellhebels 27 ist somit der Kipphebel 13 nicht aus der ersten Stellung heraus verschwenkbar, da dies formschlüssig durch den Nachstellhebel 27 verhindert wird. Der Nachstellhebel 27 ist an seinem dem Kipphebel 13 abgewandten Ende mit einem Federelement 31 verbunden, das als Zugfeder, insbesondere als Schraubenzugfeder ausgebildet ist, und einendig an dem Nachstellhebel 27 und anderendig an dem Tragbügel 10 befestigt ist, sodass der Nachstellhebel 27 durch eine Federkraft beaufschlagt in die Ausgangsstellung gedrängt wird. Dabei ist insbesondere vorgesehen, dass in der in Figur 3 dargestellten Ausgangstellung das Nachstellelement 27 durch Selbsthemmung gehalten wird, sodass wenn eine Kraft auf den Kipphebel 13 unabhängig von dem Betätigungshebel 17 wirken sollte, dies nicht zu einem Verschwenken des Kipphebels 13 von der ersten Stellung in die zweite Stellung führen kann.

Um dennoch ein Lösen des Kipphebels 13 bei Bedarf zu ermöglichen, ist ein Mitnehmerelement 32 vorgesehen, das an dem Betätigungshebel angeordnet ist und sich unter dem Nachstellelement 27 hindurch erstreckt, wie beispielsweise aus Figur 1 ersichtlich. Das Mitnahmeelement 32 ist dabei derart an dem Betätigungshebel 17 angeordnet, dass in der Arretierstellung des Betätigungshebels 17 das Nachstellelement 27 durch die Federvorspannkraft in die in Figur 3 dargestellte Ausgangsstellung verbringbar ist. Soll die Arretiereinrichtung 6 gelöst werden, so wird der Betätigungshebel 17 gemäß Pfeil 26 in Figur 2 in die Lösestellung verbracht, wodurch das Mitnehmerelement 32 das Nachstellelement 27 an seinem Ende 30 von Unten mit einer Kraft entgegen der Federkraft des Federelements 31 beaufschlagt, sodass das Nachstellelement 27 durch das Mitnehmerelement 32 um die Drehachse 29 herum in eine Stellung verschwenkt wird, wie durch ein Pfeil 33 in Figur 3 angedeutet, in welcher das Ende 30 beabstandet zu dem Kipphebel 13 liegt, sodass dieser durch den Betätigungshebel 17 und die Kulissenführung 18 in die zweite Stellung verbringbar ist. Durch die vorteilhafte Kulissenführung 18 wird dabei erreicht, dass bei einem Verschwenken des Betätigungshebels 17 von der Arretierstellung in die Lösestellung zunächst nur das Nachstellelement 27 durch das Mitnehmerelement 32 betätigt wird. Erst wenn der Führungsstift 25 in dem Führungsschlitz 24 das andere Ende des Führungsschlitzes 24 erreicht, wird auch der Kipphebel 13 mitgenommen und betätigt. Hierdurch wird auf vorteilhafte Art und Weise erreicht, dass bei einer Betätigung des Betätigungshebels 17 zuerst die Arretierung des Kipphebels 13 durch Verschwenken des Nachstellelements 27 gelöst und erst dann der Kipphebel 13 verschwenkt wird.

Die vorliegende Arretiereinrichtung 6 ermöglicht somit ein bedarfsweises Arretieren des Schwingsitzes 1 in einer gewünschten Stellung, und gewährleistet einen sicheren Verbleib der Arretierung auch wenn hohe Beschleunigungen auf das den Schwingsitz 1 aufweisende Fahrzeug wirken. Durch die Rastelemente 16, die entgegen beider Verschieberichtungen mit der Rastschiene 7 in Eingriff stehen, wie beispielhaft in Figur 3 gezeigt, ist sowohl ein Verringern des Abstands als auch ein Vergrößern des Abstandes zwischen Oberrahmen 4 und Unterrahmen 3 sicher verhindert, sofern der Betätigungshebel 17 sich in seiner Arretierstellung befindet. Durch Verbringen des Betätigungshebels 17 in die Lösestellung, wie zuvor bereits geläutert, ist die Arretiereinrichtung 6 einfach und unkompliziert lösbar. Durch die senkrecht ausgerichtete Rastschiene 7 können hohe Kräfte zwischen Oberrahmen 4 und Unterrahmen 3 sicher aufgenommen beziehungsweise übertragen werden, wodurch eine besonders robuste Arretiereinrichtung 6 zur Verfügung gestellt wird, die darüber hinaus an jeder beliebigen Stelle am Umfang des Sitzgestells 2 zwischen Oberrahmen 4 und Unterrahmen 3 anbringbar ist.

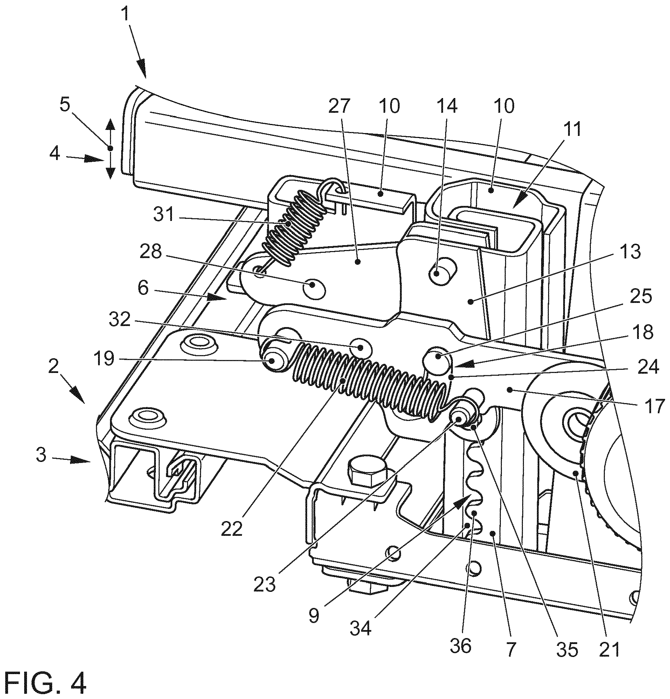

Figur 4 zeigt ein alternatives Ausführungsbeispiel der Rasteinrichtung 6 in einer perspektivischen Darstellung. Aus dem vorher beschriebenen Ausführungsbeispiel bereits bekannte Elemente sind mit den gleichen Bezugszeichen versehen, sodass insofern auf die oben stehende Beschreibung verwiesen wird. Es wird im Folgenden im Wesentlichen nur auf die Unterschiede eingegangen.

Im Unterschied zu dem vorhergehenden Ausführungsbeispiel ist nun vorgesehen, dass die Drehachsen 15 und 20 senkrecht zu der jeweiligen Strebe des Oberrahmens 4 beziehungsweise Unterrahmens 3 ausgerichtet sind, während im vorhergehenden Ausführungsbeispiel die Drehachsen parallel zu der jeweiligen Strebe ausgerichtet sind, an welchen der Tragbügel 10 und die Rastschiene 7 angeordnet beziehungsweise befestigt sind. Weiterhin weist die Rastschiene 7 als Rastprofil 9 nunmehr ein Wellenprofil 34 auf, und der Kipphebel 13 weist einen Rastbolzen 3 als Rastelement auf, der in die Täler des Wellenprofils 34 zur Arretierung einbringbar ist. Im Unterschied zu dem vorhergehenden Ausführungsbeispiel, bei welchem der Kipphebel 13 schmaler als die Rastschiene 7 ausgebildet ist, ist nunmehr vorgesehen, dass der Kipphebel 13 einen u-förmigen Querschnitt aufweist und dadurch einen das Rastprofil 9 aufweisenden Schenkel 36 der Rastschiene 7 mit zwei Schenkeln beidseitig umgreift. Der Rastbolzen 35 ist dabei an beiden Schenkeln des Kipphebels 13 befestigt, sodass eine besonders feste und robuste Arretierung gewährleistbar ist. Der Kipphebel 13 ist wie zuvor an dem Tragbügel 10 durch den Gelenkbolzen 14 verschwenkbar gehalten. Der Tragbügel 10 bildet selbst die Aufnahme 11 und ist dazu als Hülse mit einem Längsschlitz, durch welchen die Rastschiene 7 bereichsweise in die Aufnahme 11 eingreift, ausgebildet. Auch in diesem Ausführungsbeispiel ist bevorzugt der Nachstellhebel 27 vorgesehen, der wie zuvor beschrieben mit dem Kipphebel 13 und dem Mitnahmeelement 32 des Betätigungshebels 17 zusammenwirkt. Besonders bevorzugt ist an dem Rastbolzen 35 eine Rolle zwischen den Schenkeln des Kipphebels 13 drehbar gelagert, sodass Reibungskräfte beim Einrasten beziehungsweise beim Verbringen des Kipphebels 13 in die rastende erste Stellung verringert werden. Das Funktionsprinzip der Arretiereinrichtung 6 gemäß dem weiteren Ausführungsbeispiel entspricht somit dem Funktionsprinzip des vorhergehenden Ausführungsbeispiels.

## Patentansprüche

1. Schwingsitz (1) für ein Fahrzeug, insbesondere Nutzfahrzeug, mit einem Oberrahmen (4) und mit einem Unterrahmen (3), wobei der Oberrahmen (4) an dem Unterrahmen (3) derart in einer Schwingrichtung (5) schwingbar gelagert ist, dass ein Abstand zwischen dem Oberrahmen (4) und dem Unterrahmen (3) veränderbar ist, und mit einer Arretiereinrichtung (6) zum Arretieren des Oberrahmens (4) an dem Unterrahmen (3) in mehreren unterschiedlichen Abständen zueinander, wobei die Arretiereinrichtung (6) eine Rastschiene (7) und einen verschwenkbaren Kipphebel (13) aufweist, **dadurch gekennzeichnet, dass** die Rastschiene (7) parallel zur Schwingrichtung (5) ausgerichtet und an dem Oberrahmen (4) oder an dem Unterrahmen (3) befestigt ist, und wobei der Kipphebel (13) an dem Unterrahmen (3) oder an dem Oberrahmen (4) verschwenkbar gelagert ist und mindestens ein mit der Rastschiene (7) in einer ersten Schwenkstellung zur festen Arretierung des Oberrahmens (4) bezüglich des Unterrahmens (3) zusammenwirkendes Rastelement (16), sodass ein Schwingen verhindert ist, aufweist, das in einer zweiten Schwenkstellung außer Eingriff mit der Rastschiene (7) steht.

2. Schwingsitz nach Anspruch 1, **dadurch gekennzeichnet, dass** der Kipphebel (13) bistabil verschwenkbar gelagert ist, wobei die erste Schwenkstellung und die zweite Schwenkstellung jeweils eine stabile Schwenkstellung sind.

3. Schwingsitz nach einem der vorhergehenden Ansprüche, **dadurch gekennzeichnet, dass** dem Kipphebel (13) ein verschwenkbarer Betätigungshebel (17) zugeordnet ist, der mit dem Kipphebel (13) durch eine Kulissenführung (18) zu dessen Betätigung in Eingriff steht.

4. Schwingsitz nach einem der vorhergehenden Ansprüche, **dadurch gekennzeichnet, dass** der Betätigungshebel (17) durch ein mit dem Betätigungshebel (17) zusammenwirkendes Federelement (22) bistabil gelagert ist.

5. Schwingsitz nach Anspruch 4, **dadurch gekennzeichnet, dass** der Betätigungshebel (17) durch das Federelement (22) bistabil zwischen einer Arretierstellung, in welcher der Kipphebel (13) durch die Kulissenführung (18) in die erste Stellung bewegt ist, und einer Lösestellung, in welcher der Kipphebel (13) durch die Kulissenführung (18) außer Eingriff mit der Rastschiene (7) steht, gelagert ist.

6. Schwingsitz nach Anspruch 3, **dadurch gekennzeichnet, dass** der Betätigungshebel (17) und der Kipphebel (13) an einem die Rastschiene (7) zu seiner verschiebbaren Lagerung entlang der Rastschiene (7) zumindest bereichsweise umgreifenden und an dem Unterrahmen (3) oder an dem Oberrahmen (4) befestigen Tragbügel (10) gelagert sind.

7. Schwingsitz nach einem der vorhergehenden Ansprüche, **dadurch gekennzeichnet, dass** dem Kipphebel (13) ein federvorgespannter Nachstellhebel (27) zugeordnet ist, der den Kipphebel (13) in die erste Schwenkstellung drängt.

8. Schwingsitz nach Anspruch 7, **dadurch gekennzeichnet, dass** der Nachstellhebel (27) verschwenkbar an dem Tragbügel (10) gelagert und mit einem Ende (30) dem Kipphebel (13) zu dessen Beaufschlagung zugeordnet ist, um in der ersten Schwenkstellung eine Selbsthemmung zu erreichen.

9. Schwingsitz nach Anspruch 3, **dadurch gekennzeichnet, dass** der Betätigungshebel (17) ein Mitnehmerelement (32) aufweist, dass beim Verbringen des Betätigungshebels (17) von der Arretierstellung in die Lösestellung den Nachstellhebel (27) in eine den Kipphebel (13) freigebende Stellung verschwenkt.

10. Schwingsitz nach einem der vorhergehenden Ansprüche, **dadurch gekennzeichnet, dass** der Kipphebel (13) zwei Rastelemente (16) aufweist, die als in verschiedene Richtungen weisende Rastlaschen ausgebildet sind.

## Claims

1. A suspension seat (1) for a vehicle, in particular a commercial vehicle, with an upper frame (4) and with a lower frame (3), wherein the upper frame (4) is so positioned oscillatably in a oscillation direction (5) on the lower frame (3) that a distance between the upper frame (4) and the lower frame (3) is adjustable, and with a locking device (6) for locking the upper frame (4) on the lower frame (3) at several different distances from one another, wherein the locking device (6) has a latch rail (7) and a swivellable rocker arm (13), **characterized in that** the latch rail (7) is oriented parallel to the oscillation direction (5) and is fixed to the upper frame (4) or to the lower frame (3), and in which the rocker arm (13) is positioned in a swivellable manner on the lower frame (3) or on the upper frame (4) and has at least one latching element (16) cooperating with the latch rail (7) in a first swivel position for fixed locking of the upper frame (4) in relation to the lower frame (3) so that oscillation is prevented, which is out of engagement with the latch rail (7) in a second swivel position.

2. The suspension seat according to claim 1, **characterized in that** the rocker arm (13) is positioned in a bistably swivellable manner, wherein the first swivel position and the second swivel position are respectively a stable swivel position.

3. The suspension seat according to one of the preceding claims, **characterized in that** a swivellable operating lever (17) is associated with the rocker arm (13) which is engaged with the rocker arm (13) by a slide guide (18) for the operation thereof.

4. The suspension seat according to one of the preceding claims, **characterized in that** the operating lever (17) is positioned bistably by a spring element (22) cooperating with the operating lever(17) .

5. The suspension seat according to claim 4, **characterized in that** the operating lever (17) through the spring element (22) is positioned bistably between a locked position, in which the rocker arm (13) is moved through the slide guide (18) into the first position, and a release position, in which the rocker arm (13) is positioned disengaged from the latch rail (7) through the slide guide (18).

6. The suspension seat according to claim 3, **characterized in that** the operating lever (17) and the rocker arm (13) are positioned on a carrying element (10) that encompasses the latch rail (7) for slidable positioning thereof along the latch rail (7)at least in regions and is fixed on the lower frame (3) or on the upper frame (4).

7. The suspension seat according to one of the preceding claims, **characterized in that** a springloaded adjusting lever (27) is associated with the rocker arm (13) and pushes the rocker arm (13) into the first swivel position.

8. The suspension seat according to claim 7, **characterized in that** the adjusting lever (27) is positioned swivellably on the carrying element (10) and with one end (30) is associated with the rocker arm (13) for the application thereof in order to achieve a self-locking in the first swivel position.

9. The suspension seat according to claim 3, **characterized in that** the operating lever (17) has a carrier element (32) that, during movement of the operating lever (17) from the locked position into the release position swivels the adjusting lever (27) into a position releasing the rocker arm (13).

10. The suspension seat according to one of the preceding claims, **characterized in that** the rocker arm (13) has two latching elements (16), which are configured as latching tabs pointing in different directions.

## Revendications

1. Siège à suspension (1) pour un véhicule, en particulier un véhicule utilitaire, avec un cadre supérieur (4) et avec un cadre inférieur (3), le cadre supérieur (4) étant monté sur le cadre inférieur (3) de manière oscillante dans une direction d'oscillation (5), de sorte qu'une distance entre le cadre supérieur (4) et le cadre inférieur (3) peut être modifiée, et avec un dispositif de blocage (6) pour bloquer le cadre supérieur (4) au cadre inférieur (3) à plusieurs distances différentes l'un par rapport à l'autre, le dispositif de blocage (6) comportant un rail d'encliquetage (7) et un levier basculant pouvant être pivoté (13), **caractérisé en ce que** le rail d'encliquetage (7) est orienté parallèlement à la direction d'oscillation (5) et fixé au cadre supérieur (4) ou au cadre inférieur (3), et le levier basculant (13) étant monté sur le cadre inférieur (3) ou sur le cadre supérieur (4) de manière pivotante et comportant au moins un élément d'encliquetage (16) qui coopère avec le rail d'encliquetage (7) dans une première position de pivotement pour bloquer solidement le cadre supérieur (4) par rapport au cadre inférieur (3), de sorte qu'une oscillation est empêchée, et qui est dégagé du rail d'encliquetage (7) dans une deuxième position de pivotement.

2. Siège à suspension selon la revendication 1, **caractérisé en ce que** le levier basculant (13) est monté de manière bistable et pivotante, la première position de pivotement et la deuxième position de pivotement étant chacune une position de pivotement stable.

3. Siège à suspension selon l'une des revendications précédentes, **caractérisé en ce qu'**un levier d'actionnement pivotant (17), qui est engagé avec le levier basculant (13) pour son actionnement à travers un guide-coulisse (18), est associé au levier basculant (13).

4. Siège à suspension selon l'une des revendications précédentes, **caractérisé en ce que** le levier d'actionnement (17) est monté de manière bistable à travers un élément à ressort (22) qui coopère avec le levier d'actionnement (17).

5. Siège à suspension selon la revendication 4, **caractérisé en ce que** le levier d'actionnement (17) est monté à travers l'élément à ressort (22) de manière bistable entre une position de blocage, dans laquelle le levier basculant (13) est déplacé dans la première position à travers le guide-coulisse (18) et une position de libération dans laquelle le levier basculant (13) est dégagé du rail d'encliquetage (7) à travers le guide-coulisse (18).

6. Siège à suspension selon la revendication 3, **caractérisé en ce que** le levier d'actionnement (17) et le levier basculant (13) sont montés sur un étrier de support (10) qui entoure au moins partiellement le rail d'encliquetage (7) sur son support coulissant le long du rail d'encliquetage (7) et qui est fixé au cadre inférieur (3) ou au cadre supérieur (4).

7. Siège à suspension selon l'une des revendications précédentes, **caractérisé en ce qu'**un levier de réglage sollicité par ressort (27), qui pousse le levier basculant (13) dans la première position de pivotement, est associé au levier basculant.

8. Siège à suspension selon la revendication 7, **caractérisé en ce que** le levier de réglage (27) est monté à l'étrier de support (10) de manière pivotante et qu'il est associé avec une extrémité (30) au levier basculant (13) en vue de son application, pour atteindre un autoblocage dans la première position de pivotement.

9. Siège à suspension selon la revendication 3, **caractérisé en ce que** le levier d'actionnement (17) comporte un élément d'entraînement (32), **en ce que** lors du déplacement du levier d'actionnement (17) de la position de blocage à la position de libération il pivote le levier de réglage (27) dans une position qui libère le levier basculant (13).

10. Siège à suspension selon l'une des revendications précédentes, **caractérisé en ce que** le levier basculant (13) comporte deux éléments d'encliquetage (16), qui sont conçus comme des languettes d'encliquetage pointant dans différentes directions.
